# EUROPEAN PATENT APPLICATION

(11) **EP 2 509 313 A1**
(43) Date of publication of application: **10.10.2012**
(21) Application number: 10834342.7
(22) Date of filing: 19.10.2010
(51) Int. Cl.: H04N 7/18, G06T 3/00, H04N 7/173

(54) **DISPLAY CONTROL DEVICE, AND METHOD FOR FORMING DISPLAY IMAGE**

(30) Priority: 04.12.2009 JP 2009276621
(71) Applicant: Panasonic Corporation, Kadoma-shi Osaka 571-8501 (JP)
(72) Inventor: FUJII, Hirofumi, Chuo-Ku Osaka-shi Osaka 540-6207 (JP); YOKOMITSU, Sumio, Chuo-Ku Osaka-shi Osaka 540-6207 (JP); FUJIMATSU, Takeshi, Chuo-Ku Osaka-shi Osaka 540-6207 (JP); WATANABE, Takeshi, Chuo-Ku Osaka-shi Osaka 540-6207 (JP); MATSUMOTO, Yuichi, Chuo-Ku Osaka-shi Osaka 540-6207 (JP); MIWA, Michio, Chuo-Ku Osaka-shi Osaka 540-6207 (JP); SUGIURA, Masataka, Chuo-Ku Osaka-shi Osaka 540-6207 (JP); MORIOKA, Mikio, Chuo-Ku Osaka-shi Osaka 540-6207 (JP)
(74) Representative: Eisenführ, Speiser & Partner
(86) International application number: PCT/JP2010/006193
(87) International publication number: WO 2011/067886

(57) **Abstract**

Disclosed are a method for forming a display image and a display control device for displaying an image in which the position of a target is significantly easier to find. In a display control device (100), a clipped region setting unit (140) sets a clipped region candidate including both a target and a characterized area which characterizes a position in a region to be imaged as the clipped region. When a characterized area is not included in the clipped region candidate, a clipped region candidate modification unit (130) modifies either the size or the position of the clipped region candidate until said clipped region candidate includes both the target and the characterized area.

## Description

### Technical Field

The present invention relates to a display control apparatus and display image forming method, and more particularly to a technology that displays a captured image captured by a wide-angle camera.

### Background Art

A wide-angle camera such as an omnidirectional camera enables an image with a wide field-of-view range to be captured by a single camera, and is consequently widely used in a variety of fields. Wide-angle cameras are used, for example, in surveillance systems and the like. More particularly, an omnidirectional camera can obtain an omnidirectional image by using an omnidirectional lens optical system or omnidirectional mirror optical system. An omnidirectional image captured by an omnidirectional camera is generally a concentric image (doughnut image).

An example of a mode of displaying a captured image obtained by a wide-angle camera is a mode whereby a region including an object of interest (that is, target) is clipped from the captured image and displayed (see Patent Literature 1).

### Citation List

### Patent Literature

PTL 1 Patent 2007-311860

### Summary of Invention

### Technical Problem

However, when a region including a target is clipped and displayed, the position of a clipped image is naturally difficult to grasp. That is to say, it is difficult to recognize at a glance the position of a clipped image within an overall captured image.

It is an object of the present invention to provide a display control apparatus and display image forming method that display an image in which the position of a target is significantly easier to find.

### Solution to Problem

One aspect of a display control apparatus of the present invention clips an image of a clipped region from a captured image and outputs this image of a clipped region, and is provided with: a detection section that detects a target from the captured image; a characteristic location detection section that detects a characteristic location indicating characteristically a position in the captured image but outside a target image that is an image region indicating the target, or a position in a space that is a photographic subject of the captured image; and a setting section that sets the clipped region so as to include the target image and the characteristic location in the clipped region.

One aspect of a display image forming method of the present invention clips an image within a clipped region from a captured image and forms a display image, and is provided with: a step of detecting a target from the captured image; a step of detecting a characteristic location indicating characteristically a position in the captured image but outside a target image that is an image region indicating the target, or a position in a space that is a photographic subject of the captured image; and a step of setting the clipped region so as to include the target image and the characteristic location.

### Advantageous Effects of Invention

The present invention provides a display control apparatus and display image forming method that display an image in which the position of a target is significantly easier to find.

### Brief Description of Drawings

FIG.1 is a block diagram showing the configuration of a display control apparatus according to an embodiment of the present invention;
FIG.2 is a flowchart provided for an operational explanation of a display control apparatus according to an embodiment of the present invention;
FIG.3 is a drawing provided to explain a characteristic location detection method (detection by means of color information);
FIG.4 is a drawing provided to explain a characteristic location detection method (detection by means of color information);
FIG.5 is a drawing provided to explain a characteristic location detection method (detection by means of color information);
FIG.6 is a drawing provided to explain a characteristic location detection method (detection by means of shape information);
FIG.7 is a drawing provided to explain a characteristic location detection method (detection by means of shape information);
FIG.8A is a drawing provided to explain a conventional image clipping method and an image clipping method according to an embodiment of the present invention;
FIG.8B is a drawing provided to explain a conventional image clipping method and an image clipping method according to an embodiment of the present invention;
FIG.8C is a drawing provided to explain a conventional image clipping method and an image clipping method according to an embodiment of the present invention; and
FIG.8D is a drawing provided to explain a conventional image clipping method and an image clipping method according to an embodiment of the present invention.

### Description of Embodiment

Now, an embodiment of the present invention will be described in detail with reference to the accompanying drawings.

### [1] Configuration

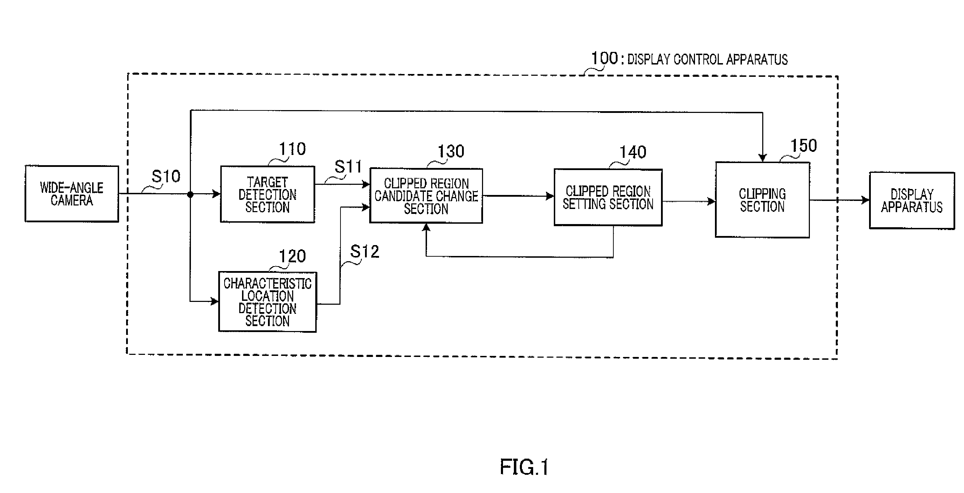

FIG.1 is a block diagram showing the configuration of display control apparatus 100 according to an embodiment of the present invention. In FIG.1, display control apparatus 100 has target detection section 110, characteristic location detection section 120, clipped region candidate change section 130, clipped region setting section 140, and clipping section 150. Display control apparatus 100 is connected to a wide-angle camera, and has a captured image captured by the wide-angle camera as input. The wide-angle camera is, for example, an omnidirectional camera. Display control apparatus 100 is connected to a display apparatus, and displays a clipped image clipped from a captured image on the display apparatus.

Target detection section 110 detects a target included in captured image S10. The target is, for example, a person. The target may also be an object such as a vehicle. Target detection section 110 detects a target from captured image S10 by performing image processing such as pattern matching, for example.

Target detection section 110 outputs target information S11 indicating the position and size of a detected target. Target position information includes, for example, the central coordinates or barycentric coordinates of a target. This target image is an image region showing a detected target, and is, for example, a region enclosed by the outline of a target, or a closed region such as a rectangle enclosing a target. Target size information is information showing the extent of a target image, indicating, for example, the coordinates of points on the outline of a target, or the image size (width and height) of a target image.

Characteristic location detection section 120 detects a "characteristic location" included in captured image S10. The characteristic location is a location within captured image S10 that characterizes a position in captured image S10 or a position in space considered to be a photographic subject. The characteristic location detection method will be described in detail later herein.

Characteristic location detection section 120 outputs characteristic location information S12 indicating the position of each characteristic location. Similarly to target information, characteristic location information may include characteristic location coordinates within an imaging coordinate system. Characteristic location information may also be per-pixel flag information obtained by setting a flag for a pixel where a characteristic location is positioned within a group of pixels composing a captured image.

Clipped region candidate change section 130 sequentially changes a clipped region candidate based on a "change rule." Clipped region candidate change section 130 changes at least either the position or the size of a clipped region candidate according to the change rule. This change rule will be described in detail later herein.

Clipped region setting section 140 selects a clipped region from a group of clipped region candidates obtained by clipped region candidate change section 130. Specifically, clipped region setting section 140 calculates a "decision criterion parameter" for each of the clipped region candidates obtained by clipped region candidate change section 130. Clipped region setting section 140 decides a clipped region from among the clipped region candidates based on the decision criterion parameter. This decision criterion parameter will be described in detail later herein.

Clipping section 150 clips an image within a clipped region set by clipped region setting section 140 from a captured image, and outputs a clipped image to the display apparatus.

### [2] Operation

The operation of display control apparatus 100 having the above configuration will now be described.

### [2-1] Overview of Processing Flow

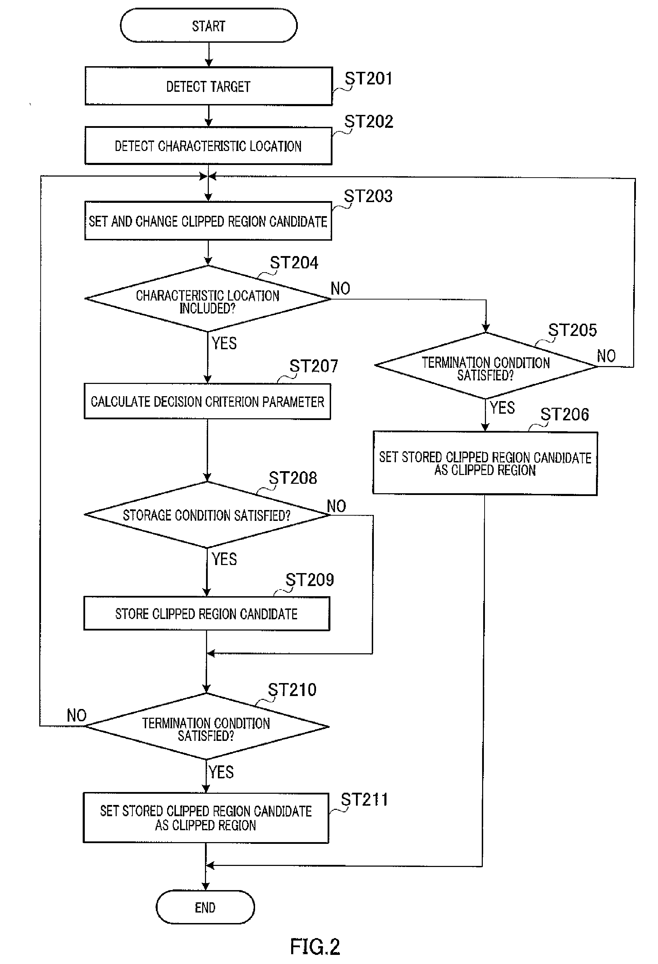

FIG.2 is a flowchart provided for an operational explanation of display control apparatus 100 according to an embodiment of the present invention.

In step ST201, target detection section 110 detects a target included in captured image S10.

In step ST202, characteristic location detection section 120 detects a characteristic location included in captured image S10.

In step ST203, clipped region candidate change section 130 sets a clipped region candidate so as to include the target detected by target detection section 110. At this time, the first time only, clipped region candidate change section 130 sets a clipped region candidate of a predetermined size so that the region center of the clipped region candidate overlaps the target. That is to say, a clipped region candidate is set so that a target image is located in the center of the clipped region candidate.

In step ST204, clipped region candidate change section 130 determines whether or not the characteristic location detected in step ST202 is included in the first clipped region candidate set in step ST203.

If the characteristic location is not included in the first clipped region candidate (step ST204: NO), in step ST205 clipped region candidate change section 130 determines whether or not a first termination condition is satisfied. Specifically, the first termination condition is a case in which the number of clipped region candidate changes has reached an upper limit, a case in which a clipped region candidate movement route such as described later herein has been gone around, or the like.

If the first termination condition is not satisfied (step ST205: NO), in step ST203 clipped region candidate change section 130 changes at least either the position or the size of the clipped region candidate according to a change rule. As described above, this change is basically repeated until at least one characteristic location is included in a clipped region candidate.

If the first termination condition is satisfied (step ST205: YES), in step ST206 clipped region setting section 140 sets a temporarily stored clipped region candidate as a clipped region. If the first termination condition is satisfied without ever proceeding to the flow of step S207 through step ST210, clipped region setting section 140 may set the clipped region candidate initially set by clipped region candidate change section 130 as a clipped region.

If the characteristic location is included in the first clipped region candidate (step ST204: YES), in step ST207 clipped region setting section 140 calculates a decision criterion parameter.

In step ST208, clipped region setting section 140 determines whether or not the first clipped region candidate satisfies a "storage condition." This storage condition relates to the above decision criterion parameter.

If the first clipped region candidate satisfies the storage condition (step ST208: YES), in step ST209 clipped region setting section 140 temporarily stores the first clipped region candidate.

In step ST210, clipped region setting section 140 determines whether or not a "clipped region search processing termination condition (second termination condition)" is satisfied. If the first clipped region candidate does not satisfy the storage condition (step ST208: NO), the processing in step ST210 is performed without passing through step ST209.

If the clipped region search processing termination condition (second termination condition) is not satisfied (step ST210: NO), clipped region setting section 140 outputs a clipped region candidate change instruction to clipped region candidate change section 130. In response to this, clipped region candidate change section 130 changes at least either the position or the size of a clipped region candidate according to a change rule, and sets a second clipped region candidate that is different from the first clipped region candidate.

If the clipped region search processing termination condition (second termination condition) is satisfied (step ST210: YES), in step ST211 clipped region setting section 140 sets a temporarily stored clipped region candidate as a clipped region.

### [2-2] Characteristic Location Detection Method

### <1> In Case of Characteristic Location Detection by Means of Color Information

Characteristic location detection section 120 detects a region of high color saturation or a region of a low-occupancy color (that is, a region of little color in a histogram) in captured image S10 as a characteristic location.

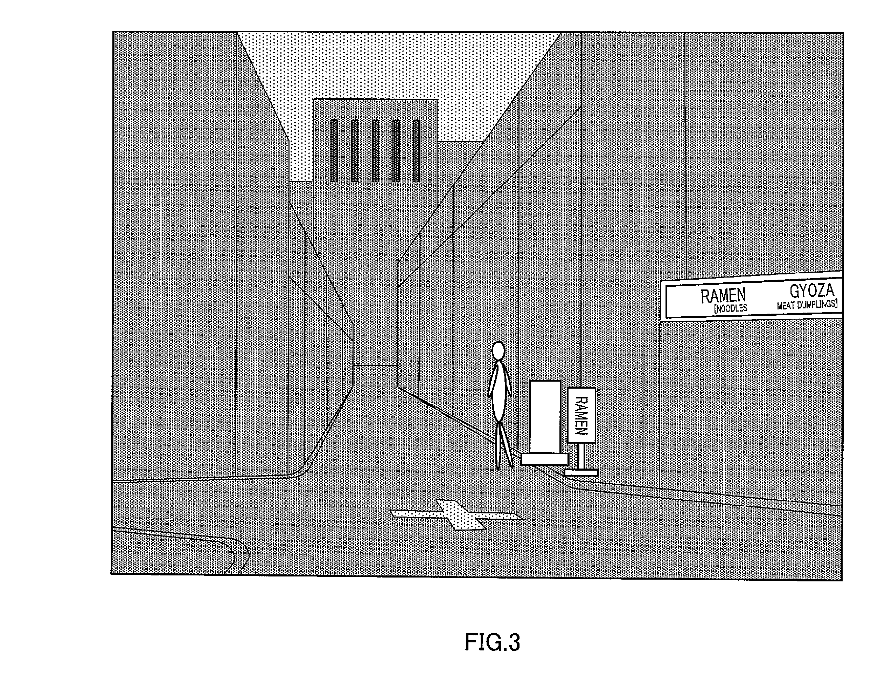

For example, a signboard normally uses a color of high color saturation, and is therefore easy to detect as a characteristic location. For instance, when a photographic subject region is a downtown area such as shown in FIG.3, by looking at an image of a signboard, a position within the photographic subject region corresponding to that image can easily be recognized. Therefore, including a region of a color of high color saturation in a clipped region enables a user to easily recognize the corresponding position of a clipped image simply by looking at that clipped image.

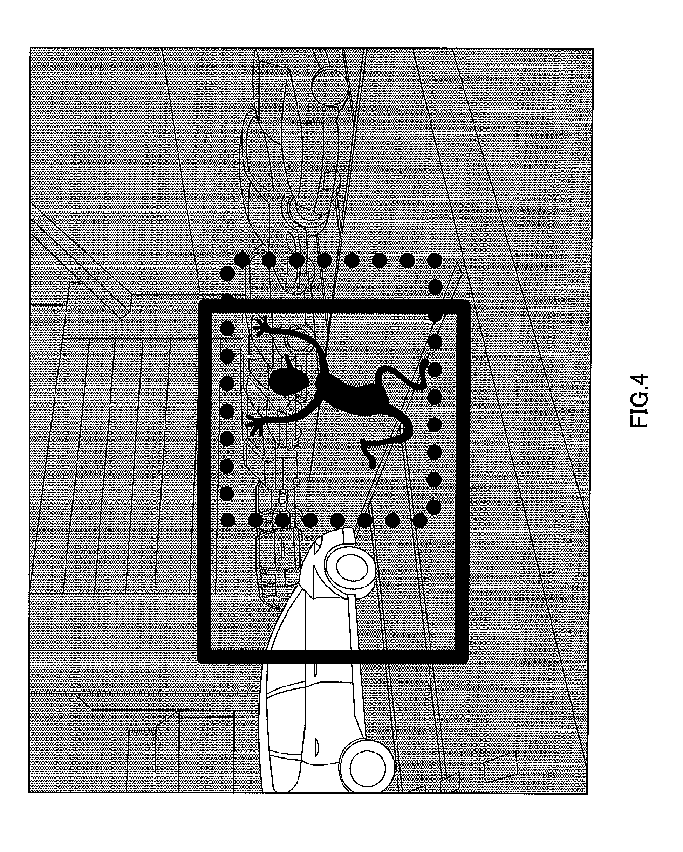

Also, an object of a characteristic color is easily recognized as a characteristic location. For example, when a photographic subject region is a month-to-month parking lot such as shown in FIG.4, by looking at an image of a vehicle of a characteristic color that is usually parked, a position within the photographic subject region corresponding to that image can easily be recognized. Therefore, including a region of a low-occupancy color in a clipped region enables a user to easily recognize the corresponding position of a clipped image simply by looking at that clipped image. Characteristic location weighting may also be performed by assigning priorities to colors in order from a distinct color (for example, a color with a low frequency of appearance in a histogram) or the like.

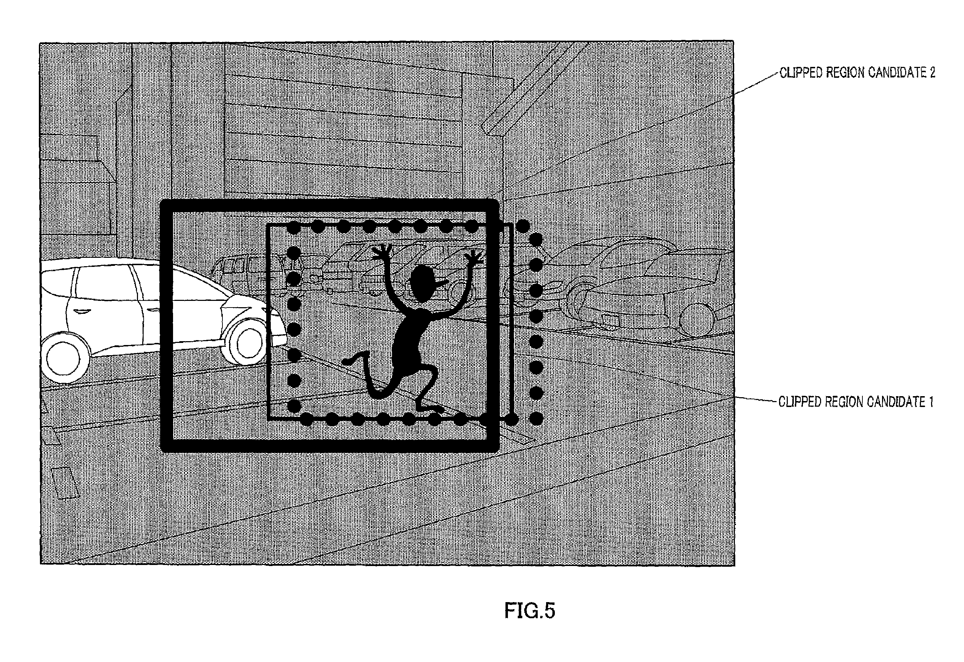

When a vehicle of a characteristic color is included in an image, in the case of a clipped image including a region in which only several pixels indicate the vehicle of a characteristic color at an edge within the clipped image, it is difficult for a user looking at the image to recognize the presence of the vehicle of a characteristic color. Therefore, when a color region having a certain area or more is included in a clipped region candidate, that color region may be determined to be a characteristic region. By this means, a situation in which it is difficult for a user to recognize the presence of a vehicle of a characteristic color in an image can be eliminated. For example, as shown in FIG.5, the area of a region of a characteristic color included in clipped region candidate 1 does not exceed a reference value (for example, 5% of the area of a clipped region candidate). Therefore, the region of a characteristic color is not treated as a characteristic location. On the other hand, the area of a region of a characteristic color included in clipped region candidate 2 exceeds the reference value. Therefore, the region of a characteristic color is treated as a characteristic location.

### <2> In Case of Characteristic Location Detection by Means of Shape Information

Characteristic location detection section 120 detects an edge location, a location including a high-frequency component, or a location including many corners (that is, a location detected by means of a Harris operator) in captured image S10 as a characteristic location.

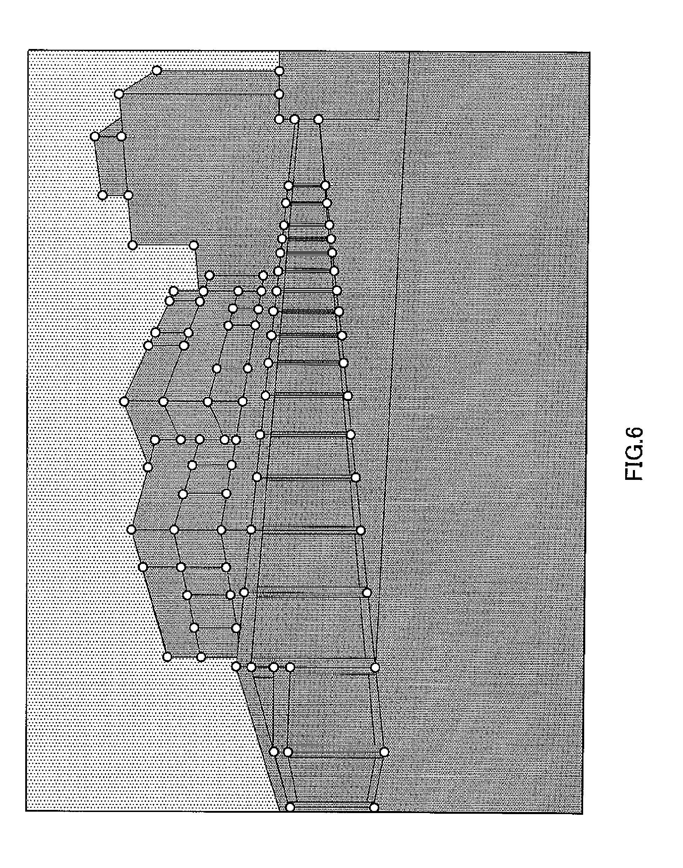

For example, when buildings are included in a photographic subject region as shown in FIG.6, outline parts of buildings, such as pillars, roofs, and so forth, are easily detected as characteristic locations. Since the positional relationship of pillars, roofs, and so forth can be grasped beforehand, by looking at an image of outline parts of a building such as pillars, roofs, and so forth, a position within the photographic subject region corresponding to that image can easily be recognized. Therefore, including an edge location, a location including a high-frequency component, or a location including many corners in a clipped region enables a user to easily recognize the corresponding position of a clipped image simply by looking at that clipped image.

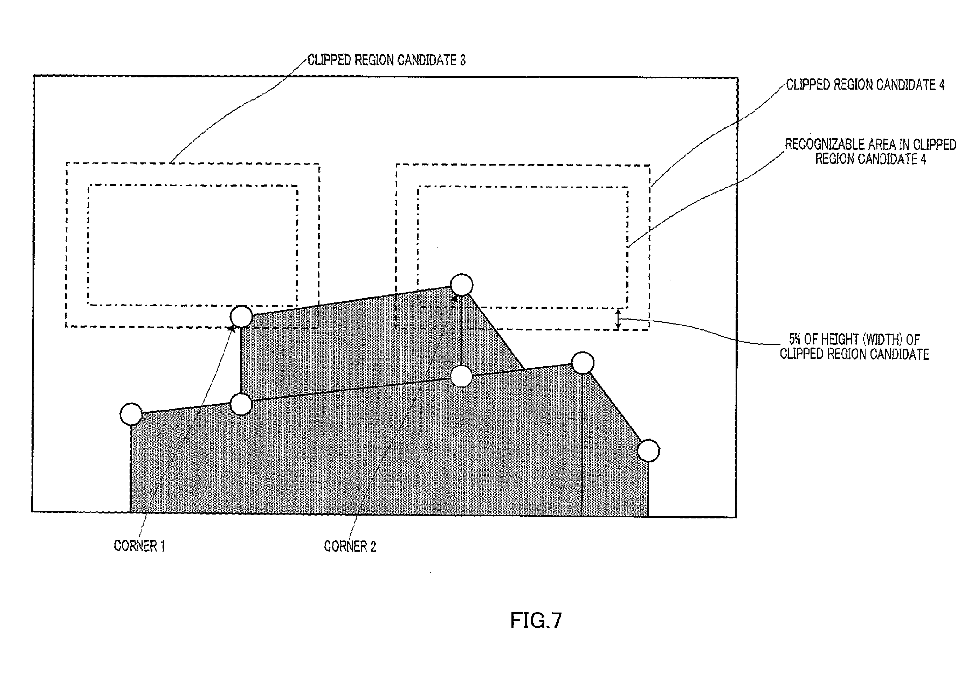

In the case of a clipped image in which only one corner is included at an edge of a clipped region candidate, a user looking at the image does not notice the presence of that corner, or has difficulty in recognizing which part is a corner. Therefore, only when located a certain number of pixels inward from an edge of a clipped region candidate, that corner may be adopted as a characteristic location. By this means, a situation in which it is difficult for a user to recognize a corner in an image can be eliminated. For example, an internal region excluding a peripheral part in a clipped region candidate (for example, a region inward from an outline line by a height (width) equivalent to 5% of the height (width) of the clipped region candidate) is defined as a "recognizable area." Then, even if a corner is included in a clipped region candidate, that corner is not treated as characteristic information if it is not included in a recognizable area. For example, corner 1 in FIG.7 is included in clipped region candidate 3 but is outside a recognizable area, and is therefore not treated as a characteristic location of clipped region candidate 3. On the other hand, corner 2 is included in a recognizable area of clipped region candidate 4, and is therefore treated as a characteristic location of clipped region candidate 4.

### <3> In Case of Characteristic Location Detection by Means of Text Information

Characteristic location detection section 120 detects a text part in captured image S10 as a characteristic location.

As stated above, a signboard normally includes text information. Therefore, including a text part in a clipped region as a characteristic location enables a user to easily recognize the corresponding position of a clipped image simply by looking at that clipped image.

### <4> In Case of Input by User

When a wide-angle camera is used as a surveillance camera, the wide-angle camera is fixed in a predetermined position. That is to say, the photographic subject region is fixed. Therefore, provision may be made for a characteristic location in the photographic subject region and its position to be held in characteristic location detection section 120, and to be included in a clipped image.

(5) In Case of Detection by Means of Optional Combination of Above Detection Methods <1> Through <4>
It is also possible to use above detection methods <1> through <4> in combination rather than independently. By this means, a characteristic location that is easier for a user looking at a clipped image to find can be detected.

For example, in the case of the example shown in FIG.4, even if a person wearing clothes of the same color as that of a vehicle of a characteristic color that is usually parked enters the photographic subject region, it is possible to detect only the vehicle of a characteristic color that is usually parked as a characteristic location with certainty by taking shape information as a detection criterion in addition to color information (that is, by combining detection methods <1> and <2>).

### [2-3] Change Rules

### <1> In Case Where Size of Clipped Region Candidate Is Fixed and Clipped Region Candidate Is Moved within Range Including Target Image

When setting or changing a clipped region candidate in step ST203, clipped region candidate change section 130 keeps the clipped region candidate size fixed, and changes the clipped region candidate position within a range that includes a target image. For example, clipped region candidate change section 130 may successively change the clipped region candidate position so that the clipped region candidate region center goes around a target image via the target image outline or outline vicinity. By this means, a characteristic location search is made possible while keeping the target image located in the vicinity of the center of the clipped region candidate.

### <2> In Case Where Clipped Region Candidate Reference Position Is Fixed and the Clipped Region Candidate Size Is Changed

When setting or changing a clipped region candidate in step ST203, clipped region candidate change section 130 fixes the clipped region candidate reference position (for example, region center) at the target image reference position (for example, center), and changes the occupancy of a target image in a clipped region candidate within a range of predetermined values or above. The change of clipped region candidate size here includes a case in which zooming-in or zooming-out is performed without changing the aspect ratio of an image, a case in which the aspect ratio of an image is changed, and a case in which zooming-in or zooming-out is performed while changing the aspect ratio of an image.

### <3> In Case Where Clipped Region Candidate Is Moved within Range Including Target Image, and Clipped Region Candidate Size Is Also Changed

When setting or changing a clipped region candidate in step ST203, clipped region candidate change section 130 changes the position and the size of a clipped region candidate within a range that includes a target image and in which the occupancy of a target image in a clipped region candidate is greater than or equal to a predetermined value. For example, clipped region candidate change section 130 changes the position and the size of a clipped region candidate within a range in which the clipped region candidate region center overlaps a target image and the occupancy of a target image in a clipped region candidate is greater than or equal to a predetermined value. By this means, a characteristic location search is possible while locating a target image in the vicinity of the center of a clipped region candidate and while keeping the target image size at or above a predetermined level.

For example, clipped region candidate change section 130 fixes a clipped region candidate at a first size and changes the clipped region candidate position via a route in which the clipped region candidate region center goes around a target image via the target image outline or outline vicinity. Next, clipped region candidate change section 130 enlarges the clipped region candidate and fixes it at a second size, and changes the clipped region candidate position on the same route. These changes are repeated until the occupancy of a target image in a clipped region candidate becomes less than a predetermined value.

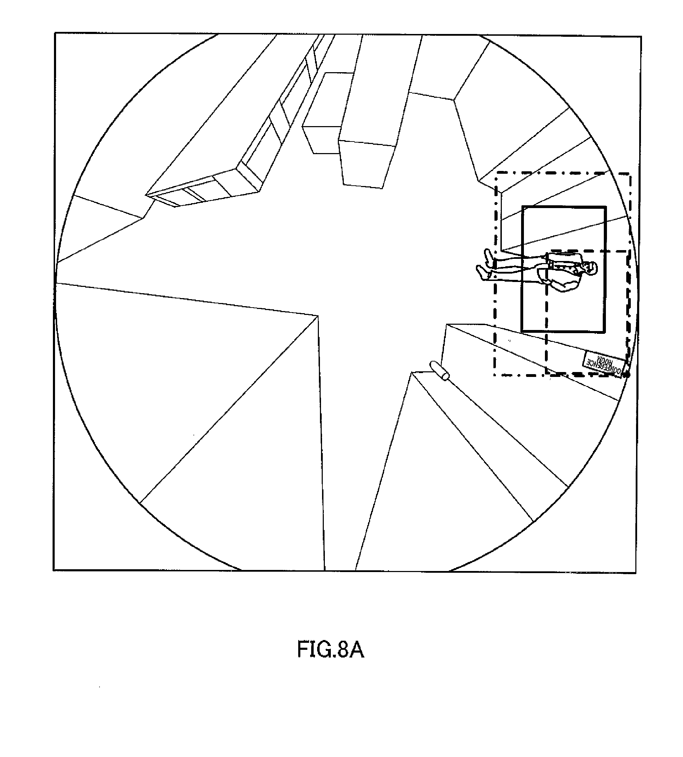

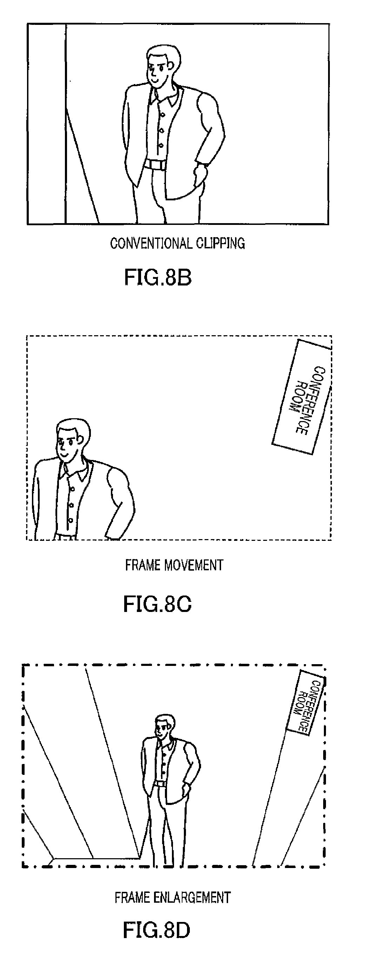

FIG.8 includes drawings provided to explain a conventional image clipping method and image clipping methods based on above change rules <1> and <2>. FIG.8 shows captured images when an interior is a photographic subject region.

FIG.8 shows an omnidirectional image that is a captured image (FIG.8A), a conventional clipped image (FIG.8B), a clipped image according to change rule <1> (FIG.8C), and a clipped image according to change rule <2> (FIG.8D). In the omnidirectional image, a frame is shown that defines a clipped region candidate corresponding to each clipped image. Also, a frame defining a clipped region candidate and the frame of a clipped image corresponding to a clipped region candidate are indicated in the same form. That is to say, a conventional clipped image and a frame defining a clipped region candidate corresponding thereto are indicated by a solid line, a clipped image according to change rule <1> and a frame defining a clipped region candidate corresponding thereto are indicated by a dotted line, and a clipped image according to change rule <2> and a frame defining a clipped region candidate corresponding thereto are indicated by a dash-dot line.

The conventional clipped image shown in FIG.8B includes no characteristic image but a target image. Therefore, a user cannot easily recognize what the position of the clipped image is by looking at this clipped image.

On the other hand, display control apparatus 100 of this embodiment first changes at least either the position or the size of a clipped region candidate until a characteristic location is included in the clipped region candidate. In the case of the clipped image according to change rule <1> and clipped image according to change rule <2> shown in FIG.8C and FIG.8D, a conference room signboard is the characteristic location. If the conference room signboard in the vicinity of an indoor entrance is included in a clipped image, a user can easily recognize that the indoor location shown in the clipped image (i.e., a position in a space that is a photographic subject of the captured image) is in the vicinity of the entrance.

### [2-4] Decision Criterion Parameter Calculation

Clipped region setting section 140 calculates a characteristic score evaluating a characteristic location included in a clipped region candidate as a number of points, the distance between a clipped region candidate region center and target image center, and the occupancy of a target image in a clipped region candidate, as decision criterion parameters.

Here, the method of finding a characteristic score differs according to the above characteristic location detection method.

Specifically, in the case of detection method <1>, the number of pixels recognized as a characteristic location is the number of characteristic locations. In detection method <2>, in the case of a location including many corners, also, a pixel recognized as a characteristic location is a count unit. This number of characteristic locations may be used as a characteristic score, or a result of applying weights to characteristic locations and adding these may be used as a characteristic score. As an example of applying a weight, in detection method <1> a priority can be assigned to a distinct color and characteristic location weighting is performed. When three colors are adopted as characteristic locations in ascending order of frequency of appearance, if weights are made 3, 2, 1 in ascending order of frequency of appearance, even for the same characteristic location a characteristic location of a color with a lower frequency of appearance has a higher characteristic score.

In detection method <2>, in the case of an edge location or a location including a high-frequency component, the number of blocks recognized as a characteristic location is the number of characteristic locations. If a plurality of pixels recognized as a characteristic location are consecutive, that entire group of consecutive pixels is one block.

In the case of detection method <3>, one character or one word (that is, a unit having meaning) is a count unit. That is to say, the number of characters or the number of words is the characteristic score.

In the case of detection method <4> by user input, the count unit differs according to which of the above modes is used to specify a characteristic location.

In the case of detection method <5>, a composite parameter may be calculated by weighted addition of the number of characteristic locations calculated for each of a plurality of detection methods according to an optional combination. As a weighting method, there is a method whereby the weight of a detection method to be given attention is made higher. For example, if it is thought that a color characteristic location is effective, the weight can be made 2 for a characteristic location detected by means of detection method <1>, and if a color characteristic location cannot be used because the image is a black-and-white image, the weight for detection method <1> can be made 0.

### [2-5] Storage Condition

When a storage condition is satisfied, clipped region setting section 140 stores a clipped region candidate that is currently subject to processing. The storage condition is that a clipped region candidate currently subject to processing exceeds a currently stored clipped region candidate with regard to a storage criterion.

### <1> Characteristic Score Being High Is Made Storage Criterion

If the value of a characteristic score of a clipped region candidate that is currently subject to processing is higher than the value of the characteristic score of a currently stored clipped region candidate, clipped region setting section 140 stores that clipped region candidate subject to processing instead. This storage criterion can be used for any of above change rules <1> through <3>.

### <2> In Case Where Value of Characteristic Score Is Greater Than or Equal to Predetermined Value, and Target Appearing in Center Part Is Made Storage Criterion:

If the value of a characteristic score of a clipped region candidate that is currently subject to processing is greater than or equal to a predetermined value, and the distance between the region center of a clipped region candidate that is currently subject to processing and the center of a target image is shorter than that of a currently stored clipped region candidate, clipped region setting section 140 stores that clipped region candidate subject to processing instead. This storage criterion can be used for above change rule <1> and change rule <3>.

### <3> In Case Where Value of Characteristic Score Is Greater than or Equal to Predetermined value, and Target Appearing Large Is Made Storage Criterion

If the value of a characteristic score of a clipped region candidate that is currently subject to processing is greater than or equal to a predetermined value, and the occupancy of a target image in a clipped region candidate that is currently subject to processing is greater than the occupancy in a currently stored clipped region candidate, clipped region setting section 140 stores that clipped region candidate subject to processing instead. This storage criterion can be used for above change rule <2> and change rule <3>.

### [2-6] Clipped Region Search Processing Termination Condition

When a clipped region search processing termination condition (second termination condition) is satisfied, clipped region setting section 140 sets a temporarily stored clipped region candidate as a clipped region. This termination condition differs according to the change rule.

That is to say, in the case of change rule <1>, the region center of a clipped region candidate going around a target image via the target image outline or outline vicinity is the termination condition.

Also, in the case of change rule <2> and change rule <3>, the occupancy of a target image in a clipped region candidate being less than a predetermined value is the termination condition.

As described above, according to this embodiment, in display control apparatus 100, if a characteristic location of a clipped region candidate is not included, clipped region candidate change section 130 changes at least either the position or the size of the clipped region candidate. This change is basically repeated until a characteristic location is included together with a target in a clipped region candidate.

By this means, a characteristic location that characterizes a position within a photographic subject region is included in a clipped image together with a target, enabling a user to easily recognize the position of the target by looking at that clipped image.

Also, clipped region candidate change section 130 fixes the size of a clipped region candidate, and changes the position of the clipped region candidate within a range in which the clipped region candidate includes a target image.

By this means, a clipped region candidate including a characteristic location can be searched for after containing a target image with certainty within a clipped region candidate.

Alternatively, clipped region candidate change section 130 fixes the reference position of a clipped region candidate at the reference position of a target image, and changes the size of a clipped region candidate within a range in which the occupancy of a target image in the clipped region candidate is greater than or equal to a predetermined value.

By this means, a clipped region candidate including a characteristic location can be searched for after containing a target image with certainty within a clipped region candidate. Also, by making the above reference position the center, a clipped region candidate including a characteristic location can be searched for while locating a target image in the center of a clipped region candidate.

Alternatively, clipped region candidate change section 130 changes the position and the size of a clipped region candidate within a range that includes a target image and in which the occupancy of a target image in a clipped region candidate is greater than or equal to a predetermined value.

By this means, a clipped region candidate including a characteristic location can be searched for after containing a target image with certainty within a clipped region candidate. Also, a clipped region candidate including a characteristic location can be searched for even if there is a distance between a target and a characteristic location.

Also, clipped region setting section 140 sets a clipped region candidate including the most characteristic locations among a group of clipped region candidates as a clipped region.

By this means, a clipped image with most target position estimated materials can be formed.

Alternatively, clipped region setting section 140 sets a clipped region candidate for which the region center and target image center are nearest among a group of clipped region candidates including a predetermined number of characteristic locations or more as a clipped region.

By this means, a clipped image can be formed that includes many target position estimated materials and shows a target clearly in the vicinity of the center.

Alternatively, clipped region setting section 140 sets a clipped region candidate for which the occupancy of a target image in the clipped region candidate is greatest among a group of clipped region candidates that include a predetermined number of characteristic locations or more as a clipped region.

By this means, a clipped image can be formed that includes many target position estimated materials and shows a target large and clearly.

Clipped region setting section 140 may also calculate the position of a target image, the size of a target image, and a number of points (score) relating to the number including a characteristic location for each of a group of clipped region candidates, and select a clipped region from among the group of clipped region candidates based on that number of points. A table in which target image sizes, target image positions, and values and numbers of points for the numbers that include a characteristic location are mutually associated is held in clipped region setting section 140. Clipped region setting section 140 calculates a number of points using this table.

In the above explanation, clipped region candidate change section 130 performs step ST204 and step ST205 processing, but this processing may be omitted. That is to say, clipped region setting section 140 may perform decision criterion parameter calculation for all clipped region candidates set by clipped region candidate change section 130. However, by using the kind of processing flow in the above explanation, clipped region setting section 140 needs only to perform the processing in steps ST207 through ST210 for a clipped region candidate including a characteristic location. Furthermore, the processing in step ST204 and step ST205 by clipped region candidate change section 130 needs only to determine the presence or absence of a characteristic location, and therefore involves a small processing load. Therefore, using the kind of processing flow in the above explanation enables the overall processing load to be reduced, and the processing time to be shortened.

Above-described display control apparatus 100 can be configured by means of a computer such as a personal computer including memory and a CPU, in which case the functions of the configuration elements included in display control apparatus 100 can be implemented by having the CPU read and execute a computer program stored in the memory.

In the above explanation, a target is detected, a clipped region candidate of predetermined size including this target as the center is set, and then the size or position of the clipped region candidate is changed so as to include a characteristic location, but provision may also be made to detect a target and characteristic location included in captured image S10 beforehand, and set a clipped region so as to include a characteristic location close to the target under a predetermined condition in the clipped region.

The disclosure of Japanese Patent Application No.2009-276621, filed on December 4, 2009, including the specification, drawings and abstract, is incorporated herein by reference in its entirety.

### Industrial Applicability

A display control apparatus and display image forming method of the present invention are suitable as a means of displaying an image in which the position of a target is significantly easier to find.

### Reference Signs List

100 Display control apparatus
110 Target detection section
120 Characteristic location detection section
130 Clipped region candidate change section
140 Clipped region setting section
150 Clipping section

## Claims

1. A display control apparatus that clips an image of a clipped region from a captured image and outputs this image of a clipped region, the apparatus comprising:
a detection section that detects a target from the captured image;
a characteristic location detection section that detects a characteristic location indicating characteristically a position in the captured image but outside a target image that is an image region indicating the target, or a position in a space that is a photographic subject of the captured image; and a setting section that sets the clipped region so as to include the target image and the characteristic location in the clipped region.

2. The display control apparatus according to claim 1, wherein:
the setting section further comprises a change section that, when a clipped region candidate including the target image is set but the characteristic location is not included in the clipped region candidate, changes at least any one of a position and a size of the clipped region candidate; and
the setting section sets, as the clipped region, the clipped region candidate changed by the change section so as to include both the target image and the characteristic location.

3. The display control apparatus according to claim 2, wherein the change section changes the position of the clipped region candidate within a range in which the clipped region candidate includes the target image.

4. The display control apparatus according to claim 2, wherein the change section fixes a reference position of the clipped region candidate at a reference position of the target image, and changes the size of the clipped region candidate within a range in which occupancy of the target image in the clipped region candidate is greater than or equal to a predetermined value.

5. The display control apparatus according to claim 2, wherein the change section changes the position and the size of the clipped region candidate within a range that includes the target image and in which occupancy of the target image in the clipped region candidate is greater than or equal to a predetermined value.

6. The display control apparatus according to claim 1, wherein the setting section sets a plurality of clipped region candidates that include the target image and the characteristic location, and sets one clipped region candidate that satisfies a predetermined condition from among a group of clipped region candidates that are the plurality of set clipped region candidates as the clipped region.

7. The display control apparatus according to claim 6, wherein the setting section sets a clipped region candidate that includes the most of the characteristic locations within the group of clipped region candidates as the clipped region.

8. The display control apparatus according to claim 6, wherein the setting section sets a clipped region candidate for which a region center of the clipped region candidate and a center of the target image are nearest among the group of clipped region candidates that include a predetermined number or more of the characteristic locations as the clipped region.

9. The display control apparatus according to claim 6, wherein the setting section sets a clipped region candidate for which occupancy of the target image in the clipped region candidate is greatest among the group of clipped region candidates that include a predetermined number or more of the characteristic locations as the clipped region.

10. The display control apparatus according to claim 6, wherein the setting section calculates a position of the target image, a size of the target image, and a score relating to a number including the characteristic location for each candidate of the group of clipped region candidates, and selects the clipped region from among the group of clipped region candidates based on that score.

11. A display image forming method that clips an image within a clipped region from a captured image and forms a display image, the method comprising:
a step of detecting a target from the captured image;
a step of detecting a characteristic location indicating characteristically a position in the captured image but outside a target image that is an image region indicating the target, or a position in a space that is a photographic subject of the captured image; and
a step of setting the clipped region so as to include the target image and the characteristic location.
